Europäisches Patentamt

**European Patent Office**

Office européen des brevets

(19)

(11) Numéro de publication: **0 277 886**
**B1**

(12)

# FASCICULE DE BREVET EUROPEEN

(45) Date de publication du fascicule du brevet:
**06.06.90**

(51) Int. Cl.⁵: **G01B 7/06**, G01N 27/416

(21) Numéro de dépôt: **88420003.1**

(22) Date de dépôt: **04.01.88**

(54) **Dispositif de contrôle au défilé de la continuité d'un revêtement métallique sur un fil métallique de nature différente.**

(30) Priorité: **06.01.87 FR 8700953**

(43) Date de publication de la demande:
**10.08.88 Bulletin 88/32**

(45) Mention de la délivrance du brevet:
**06.06.90 Bulletin 90/23**

(84) Etats contractants désignés:
**BE DE ES GB GR IT NL SE**

(56) Documents cités:
**EP-A- 0 090 407
EP-A- 0 093 681
DE-A- 2 056 154
GB-A- 649 490
US-A- 3 669 868**

(73) Titulaire: **ALUMINIUM PECHINEY, 23, rue Balzac,
F-75008 Paris Cédex 08(FR)**

(72) Inventeur: **Lefébvre, Jacques, 8, rue de la Rivoire,
F-38500 Voiron(FR)**
Inventeur: **Giménez, Philippe, 7, Chemin du Chapitre,
F-38100 Grenoble(FR)**
Inventeur: **Colombier, Gabriel, 19, rue A. Muguet,
F-38120 Saint Egrève(FR)**
Inventeur: **Golay, Armand, Avenue Marius Chorot,
F-38430 Moirans(FR)**
Inventeur: **Safrany, Jean-Sylvestre, 28, rue du Colonel
Grandval, F-54000 Nancy(FR)**

(74) Mandataire: **Vanlaer, Marcel et al, PECHINEY 28, rue de
Bonnel, F-69433 Lyon Cédex 3(FR)**

## Description

L'invention concerne un dispositif de contrôle au défilé de la continuité d'un revêtement métallique sur un fil métallique de nature et de potentiel électrochimique différents.

Le brevet français n° 2526052 revendique un procédé pour revêtir par électrolyse en continu et avec une vitesse de défilement élevée une grande longueur de métal d'une couche métallique adhérente.

Ce procédé s'applique en particulier au nickelage de fils en aluminium ou en alliages d'aluminium destinés à être utilisés notamment comme conducteurs électriques. En effet, un tel revêtement confère au fil une résistance de contact faible et stable dans le temps et permet de remplacer avantageusement le cuivre par l'aluminium pour la réalisation de la plupart des conducteurs industriels au domestiques uni ou multifilaires.

Toutefois, pour que la stabilité de la résistance de contact se maintienne dans le temps, il faut que le revêtement soit le plus continu possible.

Comme l'épaisseur de nickel est généralement très faible et de l'ordre du micron, il suffit d'un incident passager sur la ligne de fabrication ou d'un mauvais conditionnement du fil fabriqué pour que des hétérogénéités ou des arrachements du revêtement se produisent et que cette continuité soit interrompue. Il est donc intéressant de disposer d'un dispositif permettant de contrôler cette continuité de revêtement et qui puisse servir à la fois comme test de réception pour l'utilisateur et comme moyen de contrôle pour le fabricant.

Il est évident qu'en raison de la forme du produit et de la manière de l'obtenir, ce dispositif doit être applicable au défilé et donc donner une réponse instantanée.

Or, les méthodes traditionnelles utilisées pour le contrôle de la continuité des revêtements sur fil métallique font généralement appel à des réactifs chimiques et sont donc essentiellement discontinues.

Par ailleurs, elles ne s'appliquent qu'à des fils de cuivre étamés, nickelés ou argentés et non à des fils en aluminium nickelé.

C'est pourquoi la damanderesse a cherché et mis au point un dispositif pour le contrôle au défilé de la continuité d'un revêtement métallique sur un fil métallique caractérisé en ce qu'il comporte :
- une cellule en matériau isolant de l'électricité dont les parois latérales sont munies de deux ouvertures disposées de manière que le fil à contrôler qui circule entre elles soit mis en contact avec une solution d'électrolyte qui remplit au moins partiellement ladite cellule et dans laquelle est immergée la partie sensible d'une électrode de référence
- un contact électrique glissant sur le fil sortant de la cellule
- un millivoltmètre relié, d'une part séparément au contact et à l'électrolyte, d'autre part à un enregistreur.

Ainsi, le dispositif selon l'invention comporte d'abord une cellule, c'est-à-dire un récipient, fermé ou non par un couvercle, réalisé en un matériau tel que le verre ou une matière plastique ou un métal recouvert intérieurement d'un revêtement isolant. Ce récipient est muni sur ses parois latérales de deux ouvertures équipées de joints d'étanchéité à l'intérieur desquelles circule le fil à contrôler. Il contient une solution d'électrolyte en quantité suffisante pour que le fil soit immergé complètement. Cette solution, qui doit être inerte chimiquement et physiquement vis à vis du fil et du matériau constituant la cellule, est de préférence une solution aqueuse d'acide borique en concentration comprise entre 1 g/l et la saturation à la température supportable par l'électrode de référence.

Dans cette solution plonge l'extrémité sensible d'une électrode de référence qui peut être, par exemple, une électrode à calomel saturé. Sur le fil sortant de la cellule est placé un contact électrique glissant. L'électrode et le contact sont reliés à un millivoltmètre de manière à pouvoir mesurer la différence de potentiel entre le fil et l'électrode de référence, mesure qui est transmise en permanence à un enregistreur.

Le millivoltmètre doit avoir une impédance d'entrée élevée, de préférence supérieure à $10^9 \, \Omega$, de manière à éviter une lente dégradation de l'électrode de référence et consécutivement une dérive des résultats de la mesure. L'allure de la courbe obtenue sur l'enregistreur permet de savoir si le revêtement est continu ou non.

En effet, il a été observé que cette courbe, qu'elle résulte d'une mesure faite sur un fil sortant de la cuve de revêtement et donc sous tension ou sur un fil hors tension revêtu provenant d'une bobine de stockage, présentait certaines caractéristiques qui étaient en relation avec la qualité du revêtement.

En particulier, dans le premier cas, tant que le revêtement est hétérogène, la différence de potentiel est instable, ce qui se traduit par des oscillations plus ou mains importantes, mais de grande fréquence, alors que dès que le revêtement devient homogène la différence de potentiel se stabilise. On peut ainsi dans la fabrication du revêtement, trouver les conditions opératoires qui permettent d'obtenir cette stabilité et par suite une qualité de fil convenable.

Dans le deuxième cas, on constate également des variations de potentiel sur un fil mal revêtu alors que ce potentiel est constant sur un fil de bonne qualité.

Les figures jointes permettent d'illustrer l'invention.

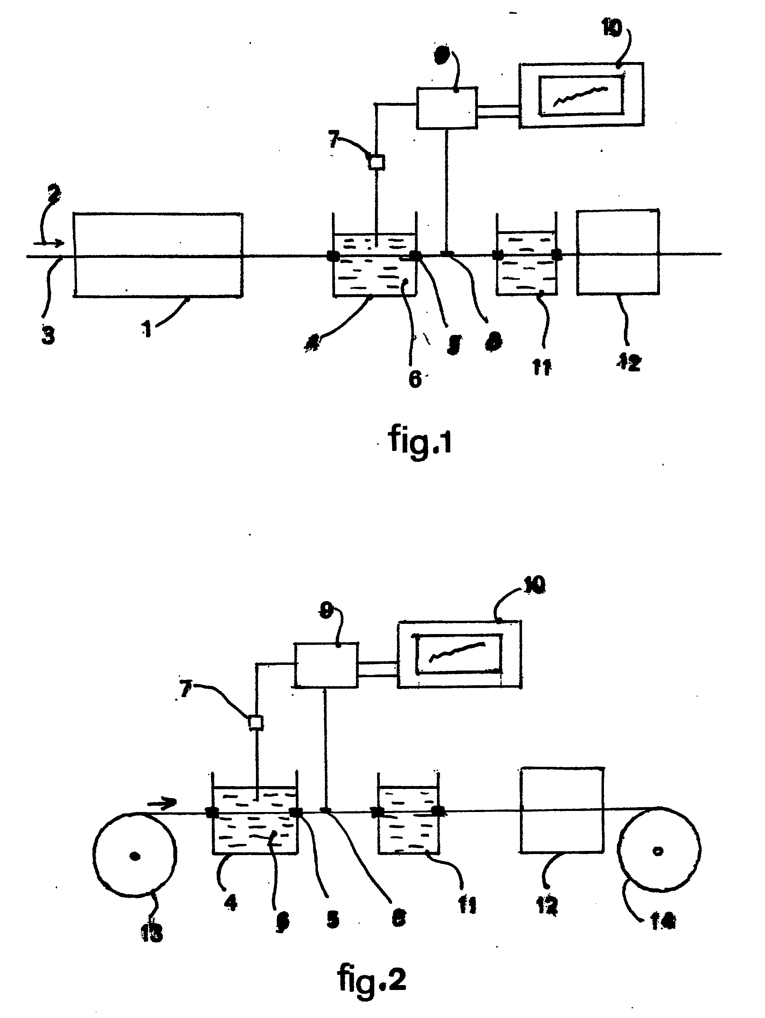

. Les figures 1 et 2 correspondent respectivement aux dispositifs utilisés, pour le contrôle, d'une part d'un fil sous tension sortant du bain de revêtement, d'autre part d'un fil hors tension provenant d'une bobine de stockage.

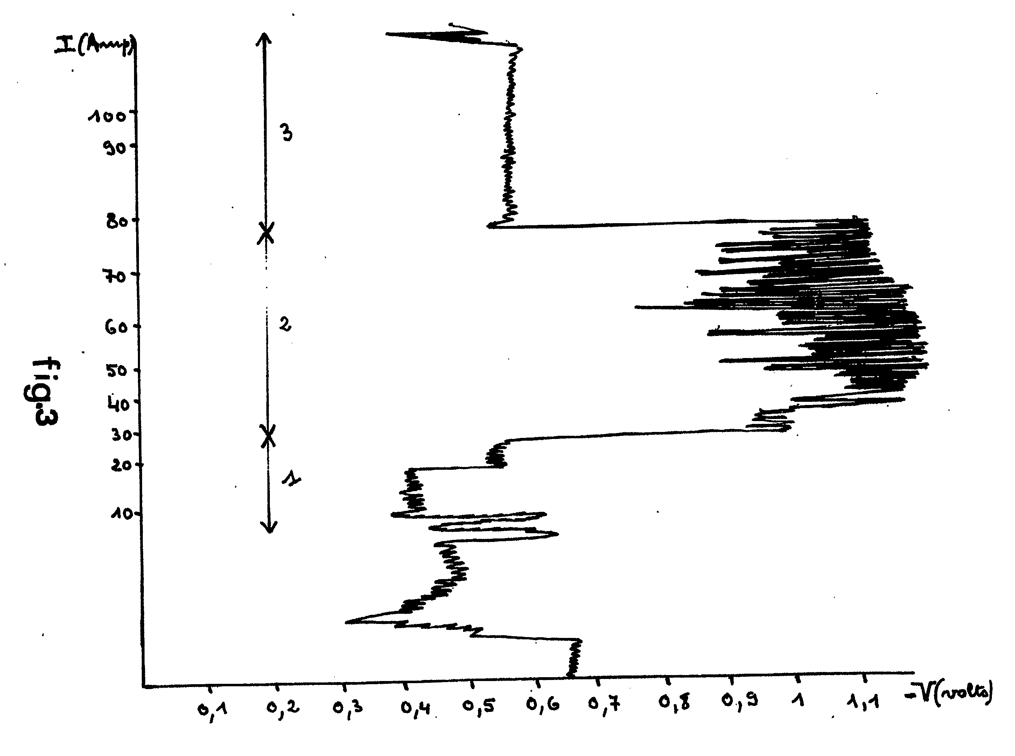

. La figure 3 représente la courbe de potentiel obtenue sur une ligne de revêtement en faisant varier l'intensité du courant de dépôt.

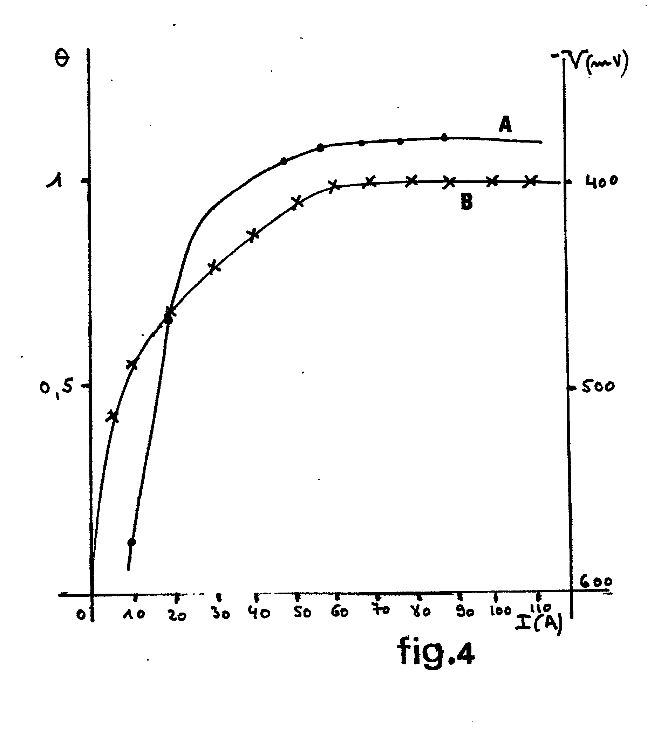

. La figure 4 représente les courbes de potentiel et du taux de recouvrement d'un fil en fonction de l'intensité sous laquelle il a été traité.

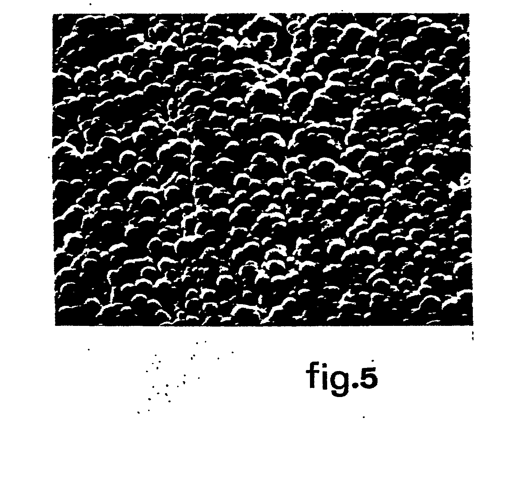

. La figure 5 représente une micrographie d'un revêtement.

Sur la figure 1, on distingue une cuve de revêtement 1 dans laquelle circule suivant le sens de la flèche 2 le fil 3 et le dispositif suivant l'invention comportant une cellule 4 équipée de joints d'étanchéité 5, contenant une solution 6 dans laquelle plonge une électrode de référence 7, un contact 8 électrique glissant sur le fil, un millivoltmètre 9 relié séparément à l'électrode de référence et au contact, un enregistreur 10 permettant de visualiser le contrôle. Ce dispositif comporte également une cuve de rinçage 11 destinée à enlever la solution du fil et un système de séchage 12 du fil.

Sur la figure 2, on retrouve le même dispositif décrit ci-dessus alimenté non plus par le fil sortant de la cuve de revêtement, mais par un fil revêtu issu d'une bobine 13, ledit fil étant enroulé sur la bobine 14 après contrôle.

La figure 3 relative au contrôle de fabrication montre les valeurs de potentiel en volts par rapport à l'électrode au calomel saturé données par l'enregistreur en fonction du temps et des différentes intensités que l'on applique par paliers pour former un revêtement de nickel sur un fil d'aluminium ou d'alliage d'aluminium d'un diamètre de 0,51 mm circulant à une vitesse de 100 m/minute suivant le procédé revendiqué dans le brevet français n° 2 526 052, à savoir le passage successif du fil dans une prise de courant liquide contenant du chlorure de nickel, de l'acide borique et de l'acide fluorhydrique puis dans un bac de revêtement à base de sulfamate de nickel contenant également de l'acide borique et du chlorure de nickel.

On distingue trois domaines 1, 2, 3 suivant les valeurs croissantes de l'intensité.

- Domaine 1 : à faible intensité le potentiel oscille. A l'examen le nickel obtenu a un faible pouvoir de recouvrement.
- Domaine 2 : dès 30 ampères, le potentiel s'accroît rapidement et le signal enregistré oscille fortement. Cela correspond à une modification défavorable de la nature chimique du dépôt.
- Domaine 3 : pour des intensités voisines de 80 ampères, le signal enregistré devient très stable et ne varie plus quand l'intensité croît, ce qui signifie que le taux de recouvrement est maximal.

A partir de tels enregistrements, on peut, pour chaque cas particulier de revêtement, quels que soient la nature du substrat, son diamètre, la vitesse de défilement, déterminer les conditions optima de densité de courant pour lesquels on a un revêtement homogène et satisfaisant à la fonction demandée.

La figure 4 relative à un fil nickelé déroulé à partir d'une bobine de stockage donne la courbe (A) du potentiel en mV en fonction de l'intensité en ampères à laquelle le fil a été soumis lors de son traitement et la courbe (B) du taux de recouvrement θ = Surface nickel/surface substrat en fonction des mêmes intensités. Ces courbes montrent la corrélation existant entre le potentiel mesuré et le taux de recouvrement. En particulier, on voit que, lorsque le recouvrement atteint 100 %, le potentiel ne varie plus. On peut ainsi par mesure du niveau de potentiel et vérification de sa stabilité, en déduire que le fil répond à l'exigence de continuité de revêtement imposée par l'utilisateur.

La figure 5 est une micrographie au grossissement 3000 d'un fil dont le taux de revêtement est voisin de 100%.

L'invention trouve son application dans le contrôle, au défilé, de tout substrat métallique revêtu d'un autre métal, notamment de fils en aluminium nickelé dont on veut s'assurer de la continuité et de la qualité du revêtement et plus particulièrement lorsqu'il s'agit de conducteurs électriques.

**Revendications**

1. Dispositif de contrôle au défilé de la continuité d'un revêtement métallique sur un fil (3) métallique de nature différente caractérisé en ce qu'il comporte: - une cellule (4) en matériau isolant de l'électricité dont les parois latérales sont munies de deux ouvertures (5) disposées de manière que le fil à contrôler qui circule entre elles soit mis en contact avec une solution (6) d'électrolyte qui remplit au moins partiellement ladite cellule et dans laquelle est immergée la partie sensible d'une électrode de référence (7),
- un contact (8) électrique glissant sur le fil sortant de la cellule,
- un millivoltmètre (9) relié, d'une part séparément au contact et à l'éelectrode, d'autre part à un enregistreur (10).

2. Dispositif selon la revendication 1, caractérisé en ce que la solution est conductrice et non agressive vis à vis du fil revêtu et de la cellule.

3. Dispositif selon la revendication 1 caractérisé en ce que la solution est de l'acide borique à une concentration comprise entre 1 g/l et la saturation à la température de travail.

4. Utilisation du dispositif selon la revendication 1 pour contrôler des fils d'aluminium ou d'alliage d'aluminium, nickelés et à usage électrique.

5. Utilisation du dispositif selon la revendication 1 pour contrôler un fil sortant d'une cuve de revêtement.

6. Utilisation dudispositif selon la revendication 1 pour contrôler un fil revêtu provenant d'une bobine de stockage.

**Patentansprüche**

1. Vorrichtung zur Überwachung der Kontinuität einer metallischen Beschichtung eines durchlaufenden metallischen Drahtes (3) unterschiedlicher Zusammensetzung, dadurch gekennzeichnet, daß sie aufweist:
— Eine Zelle (4) aus elektrisch isolierendem Material, deren Seitenwände mit zwei Öffnungen (5) ausgebildet sind, die derart angeordnet sind, daß der zu überwachende Draht, der zwischen ihnen durchläuft, in Kontakt mit einer Elektrolytlösung (6) gebracht wird, die die Zelle wenigstens teilweise füllt und in die der empfindliche Teil einer Bezugselektrode (7) eingetaucht wird,
— einen über den aus der Zelle austretenden Draht gleitenden elektrischen Kontakt (8) und
— ein Millivoltmeter (9), das einerseits getrennt mit dem Kontakt und der Elektrode, andererseits mit einem Registrierinstrument (10) verbunden ist.

2. Vorrichtung nach dem Anspruch 1, dadurch gekennzeichnet, daß die Lösung leitend und bezüglich des beschichteten Drahtes und der Zelle nicht angreifend ist.

3. Vorrichtung nach dem Anspruch 1, dadurch gekennzeichnet, daß die Lösung Borsäure mit einer Konzentration im Bereich von 1 g/1 bis zur Sättigung bei der Arbeitstemperatur ist.

4. Verwendung der Vorrichtung nach dem Anspruch 1 zur Überwachung der Drähte aus Aluminium oder Aluminiumlegierung, die vernickelt und zum elektrischen Gebrauch sind.

5. Verwendung der Vorrichtung nach dem Anspruch 1 zur Überwachung eines aus einer Beschichtungswanne austretenden Drahtes.

6. Verwendung der Vorrichtung nach dem Anspruch 1 zur Überwachung eines von einer Vorratsspule kommenden beschichteten Drahtes.

**Claims**

1. Apparatus for checking in a moving mode the continuity of a metal covering on a metal wire (3) of different nature, characterised in that it comprises:
   - a cell (4) of electrically insulating material whose side walls are provided with two openings (5) so disposed that the wire to be checked, which passes between them, is brought into contact with a solution (6) of electrolyte which at least partially fills said cell and in which the sensitive part of a reference electrode (7) is immersed,
   - an electrical contact (8) which slides on the wire issuing from the cell, and
   - a millivoltmeter (9) connected on the one hand separately to the contact and to the electrode and on the other hand to a recording means (10).

2. Apparatus according to claim 1 characterised in that the solution is conducting and does not attack the coated wire and the cell.

3. Apparatus according to claim 1 characterised in that the solution is boric acid at a level of concentration of between 1 g/l and saturation at the operating temperature.

4. Application of apparatus according to claim 1 for checking nickel-plated wires of aluminium or aluminium alloy, for electrical use.

5. Application of apparatus according to claim 1 for checking a wire issuing from the covering bath.

6. Application of apparatus according to claim 1 for checking a coated wire from a storage reel.

fig.1

fig.2

fig.3

fig.4

fig.5